# EUROPEAN PATENT APPLICATION

(11) **EP 3 174 312 A1**
(43) Date of publication of application: **31.05.2017**
(21) Application number: 16199269.8
(22) Date of filing: 17.11.2016
(51) Int. Cl.: H04R 3/12, H04R 27/00, H04N 21/8547

(54) **PLAYBACK METHOD AND PLAYBACK DEVICE FOR A MULTIROOM SOUND SYSTEM**

(30) Priority: 27.11.2015 CN 201510849533
(71) Applicant: Beijing Xiaoniao Tingting Technology Co., LTD, Beijing (CN)
(72) Inventor: ZENG, Xiaobo, Beijing (CN); GAO, Qiang, Beijing (CN); LOU, Xiaolei, Beijing (CN)
(74) Representative: Gevers Patents

(57) **Abstract**

The present disclosure discloses a playing method and a playing device. The playing method for a multiroom sound system includes that: a control channel between a master sound box and a slave sound box is established, wherein the control channel is independent of an audio stream channel or has a priority higher than that of the audio stream channel; during audio playing, when a command configured to pause playing operation is received, the command configured to pause the playing operation is notified to the slave sound box through the control channel; and when the command configured to pause the playing operation is received, data acquisition from a first buffer is stopped to pause the playing operation, wherein the first buffer is an audio buffer of the master sound box.

## Description

### TECHNICAL FIELD

The present disclosure generally relates to a multiroom sound system technology, and more particularly, to a playing method for a multiroom sound system and a playing device for the multiroom sound system.

### BACKGROUND

Along with development of a wireless technology and advancement of a sound box technology, users have higher requirements on intelligent sound box systems. A multiroom technology emerges in such an environment. The multiroom technology may be applied to more and more sound boxes. Therefore, a plurality of sound boxes in different rooms in a house of a user may play the same song at the same time. When the plurality of sound boxes work in a multiroom mode, only one sound box is in a master mode (master sound box), and the other sound boxes are in a slave mode (slave sound boxes). The slave sound boxes synchronously play music which is currently played by the master sound box. Those skilled in the art should know that the sound boxes mentioned herein may refer to independent sound boxes and may also be audio and video equipment capable of playing sounds.

For a multiroom sound system, both synchronous playing of a sound signal and good user experiences are required. Typically, a processing flow of a multiroom sound system is as follows. A master sound box determines a playing timestamp of metadata, and writes the metadata into a corresponding data buffer. The master sound box starts playing when the timestamp expires. The master sound box sends the metadata to a slave sound box through a data link at the same time of writing the metadata into the data buffer. The slave sound box receives and writes the metadata into a corresponding data buffer. The slave sound box starts playing when the timestamp expires.

In such a manner, in order to improve user experiences of the multiroom sound system, metadata buffers with smaller lengths are usually adopted to enable the master sound box and the slave sound box to rapidly respond to operation of a user at the same time. Herein, typical application scenarios involve pause of playing operation and restart of playing operation. In pause of playing operation, the user inputs a command to pause playing operation. The master sound box stops writing the metadata. Because there is no metadata, the master sound box stops playing after finishing playing the data existing in the buffer. Similarly, because there is no metadata written and no metadata is transmitted to the slave sound box through the data link, the slave sound box stops playing after finishing playing the metadata existing in the buffer because there is no metadata. Under such a condition, the amounts of data in the buffers decide response time of the user. In order to shorten the response time, it requires the buffers for the metadata to be as small as possible, but uncertainty about a transmission delay of the data link requires the buffers to be as large as possible to avoid the metadata received by the slave sound box becoming stale data due to the transmission delay of the data link. Therefore, the inventors of the present disclosure realize that there is a conflict between the user experiences and the requirement of the transmission link delay on the buffers for the metadata.

### SUMMARY

The present disclosure is intended to provide a novel technical solution for playing of a multiroom sound system.

According to a first aspect of the present disclosure, there is provided a playing method for a multiroom sound system, including: a control channel between a master sound box and a slave sound box is established, wherein the control channel is independent of an audio stream channel or has a priority higher than that of the audio stream channel; during audio playing, when a command configured to pause playing operation is received, the command configured to pause the playing operation is notified to the slave sound box through the control channel; and when the command configured to pause the playing operation is received, data acquisition from a first buffer is stopped to pause the playing operation, wherein the first buffer is an audio buffer of the master sound box.

Preferably, when the command configured to pause the playing operation is received, pausing time for pausing the playing operation may be set, the pausing time may be notified to the slave sound box through the control channel, and data acquisition from the first buffer may be stopped at the pausing time.

Preferably, the playing method may further include that: after the playing operation is paused, when a command configured to restart the playing operation is received, the command configured to restart the playing operation is notified to the slave sound box through the control channel; and data acquisition from the first buffer is restarted to restart the playing operation.

Preferably, the playing method may further include that: actual playing time configured to restart the playing operation is set; a timestamp of audio stream in the first buffer is updated on the basis of the actual playing time; the slave sound box is notified to update a timestamp of audio stream in a second buffer through the control channel, wherein the second buffer may be an audio buffer of the slave sound box; and the playing operation is restarted when the timestamp of the audio stream expires.

Preferably, the step that the timestamp of the audio stream in the first buffer is updated may include that: a difference value between the actual playing time and a timestamp of a first piece of audio stream in the first buffer is calculated; the timestamp is updated by adding the difference value to the timestamp of the audio stream in the first buffer; and the difference value is notified to the slave sound box to update the timestamp in the slave sound box through the control channel.

According to a second aspect of the present disclosure, there is provided a playing device for a multiroom sound system, including: an establishment unit, configured to establish a control channel between a master sound box and a slave sound box, wherein the control channel is independent of an audio stream channel or has a priority higher than that of the audio stream channel; a notification unit, configured to, during audio playing, when a command configured to pause playing operation is received, notify the slave sound box of the command configured to pause the playing operation through the control channel; and a playing unit, configured to, when the command configured to pause the playing operation is received, stop data acquisition from a first buffer to pause the playing operation, wherein the first buffer is an audio buffer of the master sound box.

Preferably, the playing device may further include a setting unit, configured to, when the command configured to pause the playing operation is received, set pausing time for pausing the playing operation, wherein the notification unit may be configured to notify the slave sound box of the pausing time through the control channel, and the playing unit may be configured to stop data acquisition from the first buffer at the pausing time.

Preferably, the notification unit may be configured to, after the playing operation is paused, when a command configured to restart the playing operation is received, notify the slave sound box of the command configured to restart the playing operation through the control channel; and the playing unit may be configured to restart data acquisition from the first buffer to restart the playing operation.

Preferably, the setting unit may be configured to set actual playing time configured to restart the playing operation, and the playing device may further include an updating unit, configured to update a timestamp of audio stream in the first buffer on the basis of the actual playing time; the notification unit may be configured to notify the slave sound box to update a timestamp of audio stream in a second buffer through the control channel, wherein the second buffer may be an audio buffer of the slave sound box; and the playing unit may be configured to restart the playing operation when the timestamp of the audio stream expires.

Preferably, the updating unit may be configured to calculate a difference value between the actual playing time and a timestamp of a first piece of audio stream in the first buffer and update the timestamp by adding the difference value to the timestamp of the audio stream in the first buffer; and the notification unit may be configured to notify the slave sound box of the difference value to update the timestamp in the slave sound box through the control channel.

In the present disclosure, operation of the master sound box and slave sound box in the multiroom sound system is controlled by adopting the dedicated control channel, so that more efficient control may be implemented.

Those skilled in the art should understand that each embodiment of the present disclosure or the technical solutions of the claims may be improved only in one or more aspects without solving all technical problems listed in a conventional art or the background at the same time although there are many problems in the conventional art. Those skilled in the art should understand that contents not mentioned in a claim are not intended to limit the claim.

Exemplary embodiments of the present disclosure will be described below with reference to the accompanying drawings in detail to make other characteristics and advantages of the present disclosure clearer.

### BRIEF DESCRIPTION OF THE DRAWINGS

The accompanying drawings, which are incorporated in and constitute a part of this specification, illustrate embodiments of the present disclosure and, together with the specification, serve to explain the principles of the present disclosure.
Fig. 1 is a schematic block diagram of an example of configuration of a sound box, according to an embodiment of the present disclosure.
Fig. 2 is a flow chart showing a method, according to an embodiment of the present disclosure.
Fig. 3 is a block diagram of a playing device for a multiroom sound system, according to an embodiment of the present disclosure.
Fig. 4 is an example of a multiroom sound system.

### DETAILED DESCRIPTION

Various exemplary embodiments of the present disclosure will now be described with reference to the drawings in detail. It should be noted that: relative arrangement, number expressions and numerical values of components and steps elaborated in these embodiments are not intended to limit the scope of the present disclosure unless otherwise specifically described.

Descriptions made below about at least one exemplary embodiment are only illustrative and not intended to limit the present invention and application or use thereof.

Technologies, methods and equipment known by those skilled in the art may not be discussed in detail, but the technologies, the methods and the equipment shall be considered as a part of the specification under a proper condition.

In all examples shown and discussed herein, any specific value is only exemplary and not intended to form limits. Therefore, other examples of the exemplary embodiments may adopt different values.

It should be noted that: similar reference signs and letters represent similar items in the following drawings, so that a certain item, once being defined in a drawing, is not required to be further discussed in subsequent drawings.

### <Configuration of a sound box>

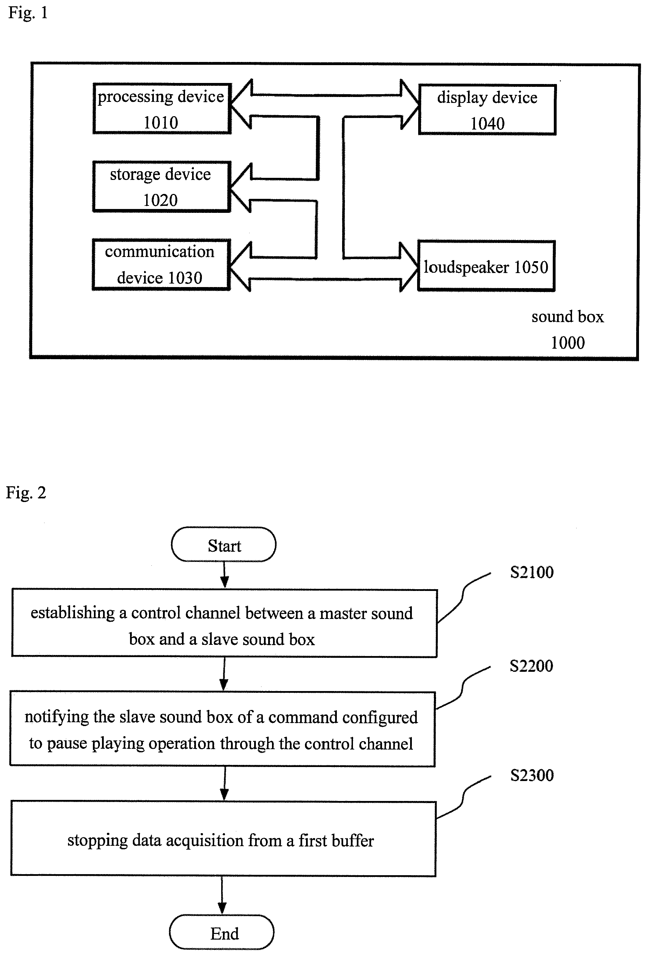

Fig. 1 is a block diagram of an example of configuration of a sound box 1000 for a multiroom sound system, according to an embodiment of the present disclosure.

As shown in Fig. 1, the sound box 1000 includes a processing device 1010, a storage device 1020, a communication device 1030, a display device 1040, a loudspeaker 1050 or the like.

The processing device 1010 may be, for example, a Central Processing Unit (CPU), a Micro Processing Unit (MCU) or the like. The storage device 1020 includes, for example, a Read-Only Memory (ROM), a Random Access Memory (RAM), a nonvolatile memory such as a hard disk or the like.

The communication device 1030 may, for example, perform wired or wireless communication.

The display device 1040 may be, for example, a liquid crystal display screen, and may be configured to, for example, display information about played music. The sound box 1000 plays sounds such as music through the loudspeaker 1050.

The sound box shown in Fig. 1 is only explanatory and not intended to limit the present disclosure and its application or use.

### <Embodiments and examples>

Fig. 2 is a flow chart showing a playing method for a multiroom sound system, according to an embodiment of the present disclosure.

As shown in Fig. 2, at Step 2100, a control channel between a master sound box and a slave sound box is established, the control channel being independent of an audio stream channel or has a priority higher than that of the audio stream channel.

Such a control channel may ensure timeliness of transmission. Specifically, the control channel purely serves as an interaction channel for simple command information only, so that reliability and real-time performance of a link may be ensured to a greater extent. Those skilled in the art should understand that the control channel may be a channel in the communication link, and may also be an additional physical line.

At Step 2200, when a command configured to pause playing operation is received, the command configured to pause the playing operation is notified to the slave sound box through the control channel.

At Step 2300, when the command configured to pause the playing operation is received, data acquisition from a first buffer is stopped to pause the playing operation, wherein the first buffer is an audio buffer of the master sound box.

In an example, when the command configured to pause the playing operation is received, pausing time for pausing the playing operation is set. At this moment, the pausing time may be notified to the slave sound box through the control channel. Data acquisition from the first buffer is stopped at the pausing time. For example, the playing operation is paused when a timestamp of audio stream in the first buffer reaches the time.

In the present disclosure, the pausing time is set to pause the playing operation without clearing the audio stream in the buffer. In such a manner, influence of a length of the buffer on response time can be eliminated or reduced on one hand; and on the other hand, when the playing operation is restarted, the data existing in the buffer may be utilized, thereby reducing a delay.

After the playing operation is paused, the playing operation may be restarted by means of a method in the conventional art. Optionally, according to the present disclosure, after the playing operation is paused, when a command configured to restart the playing operation is received, the command configured to restart the playing operation is notified to the slave sound box through the control channel. Then, data acquisition from the first buffer is restarted to restart the playing operation.

In an example, according to the present disclosure, replaying may also be implemented by updating the timestamp. For example, when the command configured to restart the playing operation is received, actual playing time configured to restart the playing operation is set. Then, the timestamp of the audio stream in the first buffer is updated on the basis of the actual playing time. The slave sound box is notified to update a timestamp of audio stream in a second buffer through the control channel, wherein the second buffer is an audio buffer of the slave sound box. The playing operation is restarted when the timestamp of the audio stream expires.

For example, the timestamp of the audio stream in the first buffer may be updated in a manner as follows. First, a difference value between the actual playing time and a timestamp of a first piece of audio stream in the first buffer is calculated. Then, the difference value is added to the timestamp of the audio stream in the first buffer to update the timestamp. In order to enable the slave sound box to similarly update the timestamp, the difference value may be notified to the slave sound box through the control channel.

As mentioned above, in the present disclosure, timeliness of transmission may be ensured by adopting the dedicated control channel.

In addition, the actual playing time is set and the timestamps are updated, so that the data existing the buffers may be utilized. In such a manner, the response time may be reduced. Moreover, the master sound box and the slave sound box may stop playing at the same time, thereby avoiding asynchronous stopping of the master sound box and the slave sound box, and providing better experiences for a user.

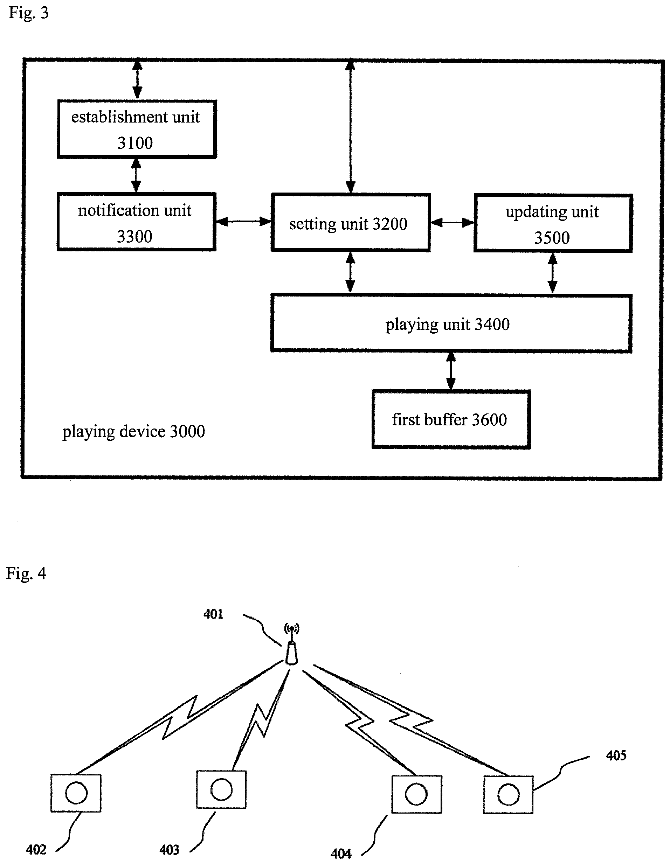

Fig. 3 is a block diagram of a playing device 3000 for a multiroom sound system, according to the present disclosure. The playing device 3000 includes an establishment unit 3100, a notification unit 3300 and a playing unit 3400.

The playing device 3000 has a function of pausing playing operation. Specifically, the establishment unit 3100, the notification unit 3300 and the playing unit 3400 may be configured as follows to realize the function of pausing the playing operation.

The establishment unit 3100 is configured to establish a control channel between a master sound box and a slave sound box, wherein the control channel is independent of an audio stream channel or has a priority higher than that of the audio stream channel.

The notification unit 3300 is configured to, during audio playing, when a command configured to pause playing operation is received, notify the slave sound box of the command configured to pause the playing operation through the control channel.

The playing unit 3400 is configured to, when the command configured to pause the playing operation is received, stop data acquisition from a first buffer 3600 to pause the playing operation. The first buffer 3600 is an audio buffer of the master sound box.

In an example, the playing device 3000 further includes a setting unit 3200 for pausing the playing operation at a preset time. Herein, the setting unit 3200 is configured to, when the command configured to pause the playing operation is received, set pausing time for pausing the playing operation. The notification unit 3300 is configured to notify the slave sound box of the pausing time through the control channel. The playing unit 3400 is configured to stop data acquisition from the first buffer at the pausing time. For example, the playing unit 3400 is further configured to pause the playing operation when a timestamp of the audio stream in the first buffer reaches the time.

Optionally, the playing device 3000 may further have a function of restarting the playing operation, and is specifically configured as follows.

The notification unit 3300 is configured to, after the playing operation is paused, when a command configured to restart the playing operation is received, notify the slave sound box of the command configured to restart the playing operation through the control channel. Then the playing unit 3400 is configured to restart data acquisition from the first buffer to restart the playing operation.

In an example, the setting unit 3200 may be configured to set actual playing time configured to restart the playing operation. Herein, the playing device 3000 may further include an updating unit 3500. The updating unit 3500 is configured to update the timestamp of the audio stream in the first buffer 3600 on the basis of the actual playing time. The notification unit 3300 is configured to notify the slave sound box to update a timestamp of audio stream in a second buffer through the control channel so as to restart the playing operation together with the master sound box. The second buffer is an audio buffer of the slave sound box. The playing unit 3400 is configured to restart the playing operation when the timestamp of the audio stream expires.

In another example, the timestamps may be updated by calculating a time difference. For example, the updating unit 3500 is configured to calculate a difference value between the actual playing time and a timestamp of a first piece of audio stream in the first buffer and update the timestamp by adding the difference value to the timestamp of the audio stream in the first buffer. The notification unit 3300 may be configured to notify the slave sound box of the difference value to update the timestamp in the slave sound box through the control channel.

Those skilled in the art should understand that each unit in the device 3000 may be implemented in various manners. For example, each unit may be implemented by configuring a processor with instructions. For example, instructions are stored in a ROM, and when the device is started, the instructions are read from the ROM to a programmable device to implement each unit. For example, each unit is solidified into a specific device (such as an Application Specific Integrated Circuit (ASIC)). Each unit may exist as an independent unit, or units may be combined for implementation. The units may be implemented in one of the abovementioned implementation manners, or may be implemented by a combination of two or more manners in the abovementioned implementation manners. For those skilled in the art, these implementation manners are equivalent.

In an embodiment, the present disclosure may further provide a sound box for a multiroom sound system, for example, the sound box 1000 shown in Fig. 1. The sound box includes a playing device according to the present disclosure, for example, the playing device 3000 shown in Fig. 3.

Fig. 4 is a diagram of an example, according to the present disclosure. For example, in Fig. 4, a sound box 402 is a master sound box, and sound boxes 403, 404 and 405 are slave sound boxes. The sound boxes 402, 403, 404 and 405 communicate through a wireless access point 401. For example, the master sound box 402 is a playing device according to the present disclosure, for example, the playing device 3000. The master sound box may pause playing operation and/or restart the playing operation by means of the playing device 3000. The slave sound boxes 403, 404 and 405 may receive a notification and command from the master sound box 402 to correspondingly pause and/or restart the playing operation.

At first, a control channel is established between the master sound box 402 and each of the slave sound boxes 403, 404 and 405. The control channel is independent of an audio stream channel or has a priority higher than that of the audio stream channel.

When receiving a command configured to pause the playing operation, the master sound box 402 notifies the slave sound boxes of the command configured to pause the playing operation through the control channel and the wireless access point 401. At this moment, the master sound box 402 may set pausing time for pausing the playing operation and notify the slave sound boxes 403, 404 and 405 of the pausing time through the control channel.

At the pausing time, the master sound box 402 and the slave sound boxes 403, 404 and 405 stop acquiring data from their corresponding buffers, thereby pausing the playing operation. Specifically, when timestamps of audio stream in the buffers reach the pausing time, the playing operation is paused.

After the playing operation is paused, when receiving a command configured to restart the playing operation, the master sound box 402 notifies the slave sound boxes 403, 404 and 405 of the command configured to restart the playing operation through the control channel. The master sound box 402 may set actual playing time configured to restart the playing operation. Then, the master sound box 402 updates the timestamp of the audio stream in a first buffer on the basis of the actual playing time. The master sound box 402 notifies the slave sound boxes 403, 404 and 405 to update the timestamps of the audio stream in their buffers through the control channel.

In order to update the timestamp, the master sound box 402 calculates a difference value between the actual playing time and a timestamp of a first piece of audio stream in its buffer. Then, the master sound box 402 updates the timestamp by adding the difference value to the timestamp of the audio stream in the first buffer. In order to enable the slave sound boxes 403, 404 and 405 to similarly update the timestamps, the master sound box 402 may notify the slave sound boxes 403, 404 and 405 of the difference value through the control channel.

When the timestamps of the audio stream expire, the playing operation is restarted.

The device and method of the present disclosure may be embodied by a program product. The program product may include a readable storage medium on which readable program instructions configured to cause a processor to implement each aspect of the present disclosure are recorded.

The readable storage medium may be physical equipment capable of maintaining and storing instructions used by instruction execution equipment. The readable storage medium may be, but not limited to, for example, electric storage equipment, magnetic storage equipment, optical storage equipment, electromagnetic storage equipment, semiconductor storage equipment or any proper combination thereof. A more specific example (non-exhaustive list) of the readable storage medium includes: a portable disk, a hard disk, a RAM, a ROM, an Erasable Programmable Read-Only Memory (EPROM or flash memory), a Static Random Access Memory (SRAM), a Compact Disc Read-Only Memory (CD-ROM), a Digital Video Disk (DVD), a memory stick, a floppy disk, mechanical coding equipment, a punched card storing instructions or raised structures in slots or any proper combination thereof. The readable storage medium adopted herein is not explained as a transitory signal itself, for example, a radio wave or other freely propagated electromagnetic waves, electromagnetic waves propagated through waveguides or other transmission media (for example, light pulses passing through optical fiber cables), or electric signals transmitted through electric wires.

The readable program instructions described herein may be downloaded to each piece of electronic equipment from the readable storage medium, or may be downloaded to external electronic equipment or external storage equipment through a network such as the Internet, a Local Area Network (LAN), a Wide Area Network (WAN) and/or a wireless network. The network may include a copper transmission cable, optical fiber transmission, wireless transmission, a router, a firewall, a switch, a gateway computer and/or an edge server. A network adapter card or network interface of each piece of electronic equipment receives the readable program instructions from the network, and forwards the readable program instructions for storage in readable storage media of each piece of computing/processing equipment.

The program instructions configured to execute operation of the present disclosure may be assembly instructions, Instruction Set Architecture (ISA) instructions, machine instructions, machine related instructions, microcodes, firmware instructions, state setting data or source codes or target codes compiled with one or any combination of multiple programming languages, and the programming languages include an object-oriented programming language such as Smalltalk and C++ and a conventional procedural programming language such as "C" language or a similar programming language. The readable program instructions may be completely executed on electronic equipment of a user, partially executed on the electronic equipment of the user, executed as an independent software package, partially executed on the electronic equipment of the user and partially executed on a remote computer, or completely executed on the remote computer or server. Under a condition where the remote computer is involved, the remote computer may be connected to the electronic equipment of the user through any type of network including a LAN or a WAN, or, may be connected to an external computer (for example, connected through the Internet by means of an Internet service provider). In some embodiments, an electronic circuit, such as a programmable logic circuit, a Field Programmable Gate Array (FPGA) or a Programmable Logic Array (PLA), is personally customized by means of state information of the readable program instructions, and the electronic circuit may execute a computer-readable program instruction, thereby implementing each aspect of the present disclosure.

Herein, each aspect of the present disclosure is described with reference to the flowcharts and/or block diagrams of the methods and devices according to the embodiments of the present disclosure. It should be understood that each block of the flowcharts and/or the block diagrams and a combination of each block in the flowcharts and/or the block diagrams may be implemented by the readable program instructions.

These readable program instructions may be provided for a processor of the electronic equipment, thereby generating a machine capable of generating a device which implements functions/actions specified in one or more blocks in the flowcharts and/or the block diagrams when these instructions are executed by the processor of the electronic equipment. These readable program instructions may also be stored in the readable storage medium, and these instructions make the electronic equipment work in a specific manner, so that the readable medium storing the instructions includes a product, which includes instructions for implementing each aspect of the functions/actions specified in one or more blocks in the flowcharts and/or the block diagrams.

These readable program instructions may further be loaded onto the electronic equipment, so that a series of operating steps are executed on the electronic equipment to generate a process implemented by the instructions, and the functions/actions specified in one or more blocks in the flowcharts and/or the block diagrams are implemented by the instructions executed on the electronic equipment.

The flowcharts and block diagrams in the drawings show implementable system architectures, functions and operation of the devices and methods according to multiple embodiments of the present disclosure. In this regard, each block in the flowcharts or the block diagrams may represent a part of a module, a program segment or instructions, and the part of the module, the program segment or the instructions includes one or more executable instructions configured to implement specified logic functions. In some alternative implementation, functions marked in the blocks may also be realized in an order different from that shown in the drawings. For example, two continuous blocks may actually be executed substantially in parallel, they may also be executed in a reverse order sometimes, and this is determined by involved functions. It is also noted that each block in the block diagrams and/or the flowcharts and combinations of the blocks in the block diagrams and/or the flowcharts may be implemented by means of a specific hardware-based system which executes the specified functions or actions, or may be implemented by virtue of a combination of specific hardware and instructions. It is understood by those skilled in the art that implementation in a hardware manner, implementation in a software manner and implementation in a combined software and hardware manner are equivalent.

Various embodiments of the present disclosure have been described above, and the descriptions made above are exemplary and non-exhaustive and are not limited to each disclosed embodiment. Many modifications and variations made without departing from the scope and spirit of each embodiment of the present disclosure are apparent to those skilled in the art. Selection of terms adopted in the present disclosure aims to best explain the principle of each embodiment, a practical application or improvements in technologies in the market, or make each disclosed embodiment of the present disclosure understood by others skilled in the art. The scope of the present disclosure is defined by the appended claims.

## Claims

1. A playing method for a multiroom sound system, comprising:
establishing a control channel between a master sound box and a slave sound box, wherein the control channel is independent of an audio stream channel or has a priority higher than that of the audio stream channel;
during audio playing, when a command configured to pause playing operation is received, notifying the slave sound box of the command configured to pause the playing operation through the control channel; and
when the command configured to pause the playing operation is received, stopping data acquisition from a first buffer to pause the playing operation, wherein the first buffer is an audio buffer of the master sound box.

2. The playing method according to claim 1, when the command configured to pause the playing operation is received, further comprising: setting pausing time for pausing the playing operation, notifying the slave sound box of the pausing time through the control channel, and stopping data acquisition from the first buffer at the pausing time.

3. The playing method according to claim 1, further comprising:
after the playing operation is paused, when a command configured to restart the playing operation is received, notifying the slave sound box of the command configured to restart the playing operation through the control channel; and
restarting data acquisition from the first buffer to restart the playing operation.

4. The playing method according to claim 3, further comprising:
setting actual playing time configured to restart the playing operation;
updating a timestamp of audio stream in the first buffer on the basis of the actual playing time;
notifying the slave sound box to update a timestamp of audio stream in a second buffer through the control channel, wherein the second buffer is an audio buffer of the slave sound box; and
restarting the playing operation when the timestamp of the audio stream expires.

5. The playing method according to claim 4, wherein updating the timestamp of the audio stream in the first buffer comprises:
calculating a difference value between the actual playing time and a timestamp of a first piece of audio stream in the first buffer;
updating the timestamp by adding the difference value to the timestamp of the audio stream in the first buffer; and
notifying the slave sound box of the difference value to update the timestamp in the slave sound box through the control channel.

6. A playing device for a multiroom sound system, comprising:
an establishment unit, configured to establish a control channel between a master sound box and a slave sound box, wherein the control channel is independent of an audio stream channel or has a priority higher than that of the audio stream channel;
a notification unit, configured to, during audio playing, when a command configured to pause playing operation is received, notify the slave sound box of the command configured to pause the playing operation through the control channel; and
a playing unit, configured to, when the command configured to pause the playing operation is received, stop data acquisition from a first buffer to pause the playing operation, wherein the first buffer is an audio buffer of the master sound box.

7. The playing device according to claim 6, further comprising a setting unit, configured to, when the command configured to pause the playing operation is received, set pausing time for pausing the playing operation,
wherein the notification unit is configured to notify the slave sound box of the pausing time through the control channel, and the playing unit is configured to stop data acquisition from the first buffer at the pausing time.

8. The playing device according to claim 6, wherein the notification unit is configured to, after the playing operation is paused, when a command configured to restart the playing operation is received, notify the slave sound box of the command configured to restart the playing operation through the control channel; and
the playing unit is configured to restart data acquisition from the first buffer to restart the playing operation.

9. The playing device according to claim 8, wherein the setting unit is configured to set actual playing time configured to restart the playing operation, and the playing device further comprises an updating unit, configured to update a timestamp of audio stream in the first buffer on the basis of the actual playing time;
the notification unit is configured to notify the slave sound box to update a timestamp of audio stream in a second buffer through the control channel, wherein the second buffer is an audio buffer of the slave sound box; and
the playing unit is configured to restart the playing operation when the timestamp of the audio stream expires.

10. The playing device according to claim 9, wherein the updating unit is configured to calculate a difference value between the actual playing time and a timestamp of a first piece of audio stream in the first buffer and update the timestamp by adding the difference value to the timestamp of the audio stream in the first buffer; and
the notification unit is configured to notify the slave sound box of the difference value to update the timestamp in the slave sound box through the control channel.
